# EUROPÄISCHE PATENTSCHRIFT

(11) **EP 3 873 763 B1**
(45) Veröffentlichungstag und Bekanntmachung des Hinweises auf die Patenterteilung: **01.07.2026**
(21) Anmeldenummer: 19761845.7
(22) Anmeldetag: 29.08.2019
(51) Int. Cl.: B60L 15/20

(54) **VERFAHREN UND ANTRIEBSSTEUERGERÄT ZUM BETRIEB VON ZUMINDEST ZWEI ELEKTRISCHEN ANTRIEBSMASCHINEN BEI EINER LASTÄNDERUNG SOWIE KRAFTFAHRZEUG MIT EINEM ANTRIEBSSTEUERGRÄT**
METHOD AND DRIVE CONTROL DEVICE FOR OPERATING AT LEAST TWO ELECTRIC DRIVE MACHINES IN THE EVENT OF A CHANGE IN LOAD AND MOTOR VEHICLE WITH A DRIVE CONTROL DEVICE
PROCÉDÉ ET APPAREIL DE COMMANDE D'ENTRAÎNEMENT SERVANT À FAIRE FONCTIONNER AU MOINS DEUX MACHINES D'ENTRAÎNEMENT ÉLECTRIQUES EN CAS DE VARIATION DE CHARGE, ET VÉHICULE AUTOMOBILE COMPRENANT UN APPAREIL DE COMMANDE D'ENTRAÎNEMENT

(30) Priorität: 30.10.2018 DE 102018218605
(43) Veröffentlichungstag der Anmeldung: 08.09.2021
(73) Patentinhaber: AUDI AG, 85045 Ingolstadt (DE)
(72) Erfinder: WALDAU, Arthur, 85072 Eichstätt (DE); SCHIELE, Marcus, 85055 Etting (DE)
(86) Internationale Anmeldenummer: PCT/EP2019/073061
(87) Internationale Veröffentlichungsnummer: WO 2020/088818

(56) Entgegenhaltungen:
- DE-T5- 112016 005 383
- JP-A- 2006 248 319
- US-A1- 2015 251 541
- US-A1- 2017 028 871
- US-B1- 9 469 199

## Beschreibung

Die Erfindung betrifft ein Verfahren zum Betrieb von zumindest zwei elektrischen Antriebsmaschinen bei einer Laständerung eines Fahrzeugs sowie ein Antriebssteuergerät zum Betrieb von zumindest zwei elektrischen Antriebsmaschinen. Erfindungsgemäß ist auch ein Kraftfahrzeug mit einem Antriebssteuergerät vorgesehen.

In einem Fahrzeug mit einem Elektromotor und getrennt angetriebenen Achsen beziehungsweise Rädern, das heißt einer elektrischen Antriebsmaschine je angetriebener Achse, wird ein Vortriebs- beziehungsweise Rekuperationsmoment auf beiden Antriebsmaschinen üblicherweise in die gleiche Richtung eingestellt. Das heißt, dass beim Beschleunigen beide Antriebsmaschinen ein positives Moment und beim Bremsen oder Rekuperieren beide Antriebsmaschinen ein negatives Moment liefern. Beim Übergang aus einem Schubbetrieb in einen Zugbetrieb, einer sogenannten Laständerung beziehungsweise Lastwechsel, kommt es zu einem Anlagewechsel der Antriebsbauteile, Aggregate und Zahnflanken. Diese Laständerung kann beispielsweise während einer Fahrt oder bei einem Anfahren auftreten.

Dieser Übergang ist oft mit einem Ruck oder akustisch auffälligem Geräusch verbunden. Dieses Problem ist im Stand der Technik bekannt und muss je nach Bauteiltoleranzen mit akustischen Dämpfungsmaßnahmen behoben werden. Diese Maßnahmen sind oft sehr aufwendig und erfordern einen hohen Kostenaufwand. Außerdem verliert das Fahrzeug an Spontanität. Dadurch ist eine sportliche Auslegung der Antriebsmaschinen nur begrenzt möglich, was zu einer wenig sportlichen Fahrzeugauslegung führt. Außerdem entstehen Zusatzkosten durch teure Dämpfungsmaßnahmen.

Aus der DE 601 04 247 T2 ist ein Verfahren zum Aufnehmen eines Spiels in einem Antriebssystem bekannt, wenn ein Lastwechsel auftritt. Das Antriebssystem weist einen Antriebsmotor auf, der vorzugsweise ein Verbrennungsmotor ist, welcher mit einem Antriebsstrang in einem Fahrzeug gekoppelt ist. Das Antriebssystem weist zusätzlich einen Elektromotor auf, welcher auf den Antriebsmotor und den Antriebsstrang mit einem Antriebs- oder Bremsmoment wirkt, wobei der Elektromotor an den Antriebsmotor gekoppelt ist und einen Teil des Antriebsstrangs bildet. Außerdem ist ein Steuersystem zum Steuern des Elektromotors bereitgestellt, ob ein Lastwechsel bevorsteht, das bestimmt, ob ein Antriebs- oder Bremsmoment von dem Elektromotor benötigt wird, und das einen einzelnen Puls an den Elektromotor sendet, wenn ein Lastwechsel auftritt, wobei ein Momentpuls von dem Elektromotor das Spiel des Antriebsstrangs aufnimmt, bevor eine Momentstufe von dem Antriebsmotor beginnt.

Aus der DE 10 2010 053 538 A1 ist ein Antriebsstrang in einem Kraftfahrzeug mit einer Brennkraftmaschine mit einer mit zumindest einer Getriebeeingangswelle eines Getriebes verbindbaren Kurbelwelle bekannt. Zur Dämpfung von Triebstrangschwingungen ist zwischen Brennkraftmaschine und einer Antriebswelle des Getriebes an einem rotierenden Bauteil eine schaltbare Wirbelstrombremse vorgesehen.

Aus der DE 11 2016 005383 T5 ist ein Steuergerät für einen Kraftfahrzeug-Antriebsstrang bekannt, wobei das Steuergerät konfiguriert ist, den Betrag an Drehmoment, das von jeder von einer Vielzahl von Antriebsmomentquellen erzeugt wird, zu steuern. Hierbei können Drehmomente in gleicher und in entgegengesetzter Richtung gesteuert werden.

US 2017/028871 A1 bezieht sich auf ein Elektrofahrzeug, das Motoren umfasst, von denen jeder so ausgelegt ist, dass er ein Antriebsmoment auf ein entsprechendes Antriebsrad ausübt. Zusätzlich wird darauf hingewiesen, dass Gegenmomente in entgegengesetzten Richtungen und mit gleicher Größe zu den endgültigen Soll-Brems-/Antriebsmomenten der Vorder- bzw. Hinterräder addiert werden können, um zu verhindern, dass das endgültige Soll-Brems-/Antriebsmoment jedes Rades die Null-Grenze überschreitet, ohne dabei die Summe der endgültigen Soll-Brems-/Antriebsmomente der vier Räder zu verändern.

Aus der US 2015/251541 A1 ist bekannt, dass jedes Rad eines Fahrzeugs eine eigene elektrische Antriebsmaschine aufweisen kann.

Der Erfindung liegt die Aufgabe zugrunde, nachteilige Effekte, die bei einer Laständerung auftreten, zu verringern.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren offenbart.

Durch die Erfindung ist ein Verfahren zum Betrieb von zumindest zwei elektrischen Antriebsmaschinen bei einer Laständerung eines Fahrzeugs bereitgestellt, wobei durch eine erste elektrische Antriebsmaschine ein erstes Moment auf mindestens ein Rad einer ersten Fahrzeugachse übertragbar ist, und durch eine zweite elektrische Antriebsmaschine ein zweites Moment auf mindestens ein Rad einer zweiten Fahrzeugachse übertragbar ist. Dabei ist jedes Moment durch einen Betrag und durch eine Richtung definiert. Mit anderen Worten kann das Verfahren bei dem Betrieb eines Fahrzeugs angewendet werden, das zumindest zwei elektrische Antriebsmaschinen aufweist, wobei eine elektrische Antriebsmaschine eine Drehstrommaschine sein kann, die ein Moment, beziehungsweise Drehmoment, erzeugt. Dabei kann jeweils an jeder Achse eines Fahrzeugs eine elektrische Antriebsmaschine angebracht sein, die jeweils ein Moment erzeugt, das auf ein Rad der jeweiligen Fahrzeugachse übertragbar ist, wobei eine jeweilige Antriebsmaschine das Moment über eine Welle an das jeweilige Rad übertragen kann und/oder die jeweilige elektrische Antriebsmaschine direkt an dem Rad verbaut ist, sodass die elektrische Antriebsmaschine das Moment direkt auf das Rad übertragen kann. Es kann vorgesehen sein, dass die jeweiligen elektrischen Antriebsmaschinen je angetriebene Achse unabhängig voneinander angeordnet sind. Es ist jedoch auch denkbar, dass die elektrischen Antriebsmaschinen über einen Antriebsstrang miteinander verbunden sind. Das Moment, das durch jede elektrische Antriebsmaschine erzeugt wird, weist gemäß einer vektoriellen Darstellung einen Betrag und eine Richtung auf.

Das Verfahren umfasst als Schritt a) das Bestimmen, ob innerhalb eines ersten vorgebbaren Zeitraums eine Laständerung bevorsteht und als Schritt b), falls Schritt a) bejaht wird, das Einstellen des zweiten Moments für einen zweiten vorgebbaren Zeitraum mit einer Richtung, die einer momentanen Richtung des ersten Moments entgegengesetzt ist. Anders ausgedrückt kann das Verfahren bestimmen, ob innerhalb des ersten vorgegebenen Zeitraums die Laständerung bevorsteht, und wenn diese Änderung bevorsteht, kann das zweite Moment entgegengesetzt zu einer momentanen Richtung des ersten Moments eingestellt werden. Die Laständerung kann dabei die Änderung des Moments bei einem Anfahren sein und/oder die Änderung des Moments einer elektrischen Antriebsmaschine während einer Fahrt. Ein erster vorgegebener Zeitraum kann beispielsweise eine Zeitspanne sein, die eine elektrische Antriebsmaschine benötigt, um nach Betätigen eines Gaspedals ein Moment aufzubauen. Der zweite vorgebbare Zeitraum kann eine Zeitspanne sein, in der die Laständerung auftritt, also die Zeitspanne zwischen einem Übergang aus einem Schubbetrieb in einen Zugbetrieb.

Durch das Verfahren ergibt sich der Vorteil, dass eine sportlichere Einstellung des Fahrzeugs gewählt werden kann, wie beispielsweise bei einem schnellen Anfahren des Fahrzeugs, einem sogenannten Race-Start, in dem ein Antriebsstrang vorgespannt werden kann. Außerdem kann erreicht werden, dass ein Ruck, der aus dem Stand der Technik bekannt ist, abgeschwächt werden kann, was zu mehr Komfort im Straßenverkehr beziehungsweise beim Rangieren und Einparken führen kann. Des Weiteren kann ein Verschleiß der Antriebsbauteile verringert werden, da bei der Laständerung die Antriebsbauteile, wie zum Beispiel die Zahnflanken, nicht mehr mit hoher Kraft umschlagen, sondern durch das Verfahren bereits in die gewünschte Richtung umgelegt werden. Außerdem können auffällige Geräusche bei der Laständerung abgeschwächt werden, wodurch weniger akustische Dämmmaßnahmen notwendig sind, was die Kosten reduziert.

Zu der Erfindung gehören auch Ausführungsformen, durch die sich zusätzliche Vorteile ergeben.

Eine Ausführungsform sieht vor, dass das erste Moment vor der Ausführung von Schritt a) einen Betrag aufweist, der ungleich null ist, wobei als Laständerung ein Lastwechsel durchgeführt wird, bei dem das zweite Moment seine Richtung ändert. Mit anderen Worten kann sich das Fahrzeug in einem Fahrbetrieb befinden, bei dem beide Momente zunächst in eine Richtung weisen können und durch das Verfahren das zweite Moment bei der Laständerung seine Richtung ändern kann. Die Laständerung kann hier als Lastwechsel während einer Fahrt bezeichnet werden. Hierdurch ergibt sich der Vorteil, dass während einer Fahrt eine sportlichere Fahrweise möglich ist, und weniger akustische Isolierungen benötigt werden, da durch die Erfindung auffällige akustische Geräusche bei dem Lastwechsel während der Fahrt verringert werden können.

Eine Ausführungsform sieht vor, dass das erste Moment vor Ausführung von Schritt a) einen Betrag aufweist, der gleich null ist, wobei als Laständerung das erste Moment einen Betrag ungleich null annimmt. Mit anderen Worten wird das Verfahren bei einem Anfahrvorgang durchgeführt, bei dem die Laständerung die Änderung des Betrags des ersten Moments von null auf einen Betrag ist, der ungleich null ist. Das heißt zum Beispiel, dass das Fahrzeug aus dem Stand durch das erste Moment anfahren kann. Diese Ausführungsform hat den Vorteil, dass eine sportlichere Fahreinstellung erreicht werden kann, indem ein Schnellstart, beziehungsweise Race-Start, ermöglicht wird. Außerdem kann hierdurch ein höherer Komfort beim Stoppand-Go-Verkehr beziehungsweise beim Rangieren und Einparken erreicht werden, indem ein Ruck beim Anfahren gedämpft wird.

Eine weitere Ausführungsform sieht vor, dass in Schritt b) das zweite Moment mit einem vorgegebenen Betrag in die entgegengesetzte Richtung zu der momentanen Richtung des ersten Moments eingestellt wird. Das heißt, dass der vorgegebene Betrag verwendet werden kann, um das zweite Moment in die entgegengesetzte Richtung zu der momentanen Richtung des ersten Moments einzustellen. Vorzugsweise kann der vorgegebene Betrag kleiner sein, als der Betrag des ersten Moments, sodass durch die Summe der jeweiligen Momente ein positives Gesamtmoment und somit eine Beschleunigung in eine Richtung erreicht werden kann. Insbesondere kann der vorgegebene Betrag ein Betrag sein, der das zweite Moment auf einen Wert von 5 bis 20 Newtonmetern einstellt. Vorteilhaft hierbei ist es, dass ein ausreichend hoher Betrag eingestellt wird, um einen Antriebsstrang vorzuspannen, damit eine Laständerung aufgenommen werden kann.

Eine Ausführungsform sieht vor, dass der Schritt b) ferner ein zeitgleiches Erhöhen des ersten Moments um den Betrag des zweiten Moments in Richtung des ersten Moments für den zweiten vorgegebenen Zeitraum umfasst. Anders formuliert, kann das erste Moment für den zweiten vorgegebenen Zeitraum, in dem der Lastwechsel beziehungsweise die Laständerung stattfinden kann, um den Betrag des zweiten Moments erhöht werden. Hierdurch ergibt sich der Vorteil, dass innerhalb des zweiten vorgegebenen Zeitraums die Summe der beiden Momente vor und nach der Durchführung des Verfahrens gleich bleibt. Dadurch kann ein Ruck in dem Fahrzeug verringert werden.

Eine Ausführungsform sieht vor, dass das Verfahren ferner als Schritt c) ein Bestimmen umfasst, ob der zweite vorgegebene Zeitraum abgelaufen ist, und als Schritt d), falls Schritt c) bejaht wird, zeitgleich innerhalb eines dritten vorgegebenen Zeitraums, der sich dem zweiten vorgegebenen Zeitraum anschließt, ein Einstellen des zweiten Moments in Richtung des ersten Moments und ein Verringern des ersten Moments um den Betrag des zweiten Moments durchgeführt werden. Mit anderen Worten kann nach dem zweiten vorgegebenen Zeitraum, der beispielsweise benötigt werden kann, um die Laständerung durchzuführen, ein dritter vorgegebener Zeitraum vorgesehen sein, in dem das zweite Moment wieder zurück in die Richtung des ersten Moments eingestellt wird und sich gleichzeitig der Betrag des ersten Moments um den Betrag des zweiten Moments verringert, sodass eine Summe der jeweiligen Momente innerhalb des dritten vorgegebenen Zeitraums gleich bleibt. Der dritte vorgegebene Zeitraum kann beispielsweise die Zeit sein, die das zweite Moment benötigt, um die Richtung zu dem ersten Moment einzustellen. Diese Einstellung des zweiten Moments und die Verringerung des ersten Moments kann beispielsweise über eine geeignete Vorsteuerung, wie beispielsweise über Rampenfunktionen, entstehen oder mit Filtern derart gefiltert werden, dass ein gleichmäßiger Übergang der Momente stattfindet. Der Vorteil dieser Ausführungsform ist es, dass die Momente nach einer Laständerung wieder in eine gleiche Richtung eingestellt werden können, ohne dass eine auffällige Verzögerung eintritt. Außerdem kann durch die Einstellung der beiden Momente in eine Richtung Energie gespart werden, da kein negatives Moment mehr kompensiert werden muss.

Eine weitere Ausführungsform sieht vor, dass das Verringern des ersten Moments basierend auf einer Sensormessung durchgeführt wird, bei der ein Leistungsparameter der ersten elektrischen Antriebsmaschine und ein Leistungsparameter der zweiten elektrischen Antriebsmaschine bestimmt wird, und anschließend das erste Moment so geregelt wird, dass die Summe beider Leistungsparameter konstant bleibt. Mit anderen Worten kann das erste Moment derart geregelt werden, dass eine Summe der Leistungsparameter beider elektrischer Antriebsmaschinen gleich bleibt. Ein Leistungsparameter kann dabei beispielsweise eine das Moment sein, das durch einen Drehmomentsensor gemessen werden kann, es kann jedoch auch ein Stromwert sein, der mittels eines Stromsensors die Leistung der jeweiligen Antriebsmaschine bestimmt werden kann. Beispielsweise kann beiden elektrischen Antriebsmaschinen eine insgesamte elektrische Leistung zur Verfügung gestellt werden, wobei sich bei einer Erhöhung der elektrischen Leistung der zweiten Antriebsmaschine die Leistung der ersten elektrischen Antriebsmaschine entsprechend verringert. Durch diese Ausführungsform ergibt sich der Vorteil, dass beide elektrischen Antriebsmaschinen miteinander oder in Abhängigkeit voneinander geregelt werden können, ohne dass sich eine Änderung des insgesamten Moments ergibt. Hierdurch kann ein Ruck oder ein auffälliges Geräusch im Fahrzeug verringert werden.

Eine Ausführungsform sieht vor, dass mindestens zwei Räder an der ersten Fahrzeugachse und mindestens zwei Räder an der zweiten Fahrzeugachse angebracht sind und jedes Rad eine eigene elektrische Antriebsmaschine aufweist, wobei die Summe der Momente der Räder an der ersten Fahrzeugachse das erste Moment ergibt und die Summe der Momente der Räder an der zweiten Fahrzeugachse das zweite Moment ergibt. Anders formuliert, kann jedes Rad jeder Fahrzeugachse eine eigene elektrische Antriebsmaschine aufweisen, wobei die Momente der ersten Fahrzeugachse zusammengenommen das erste Moment bilden und die Momente der zweiten Fahrzeugachse zusammengenommen das zweite Moment bilden. Hierdurch ergibt sich der Vorteil, dass das Verfahren zum Betrieb eines Fahrzeugs bei einer Laständerung angewendet werden kann, bei dem jedes Rad des Fahrzeugs eine eigene elektrische Antriebsmaschine aufweist.

Ein weiterer Aspekt der Erfindung betrifft ein Antriebssteuergerät zum Betrieb von zumindest zwei elektrischen Antriebsmaschinen bei einer Laständerung, wobei durch eine erste elektrische Antriebsmaschine ein erstes Moment auf mindestens ein Rad einer ersten Fahrzeugachse übertragbar ist, und durch eine zweite elektrische Antriebsmaschine ein zweites Moment auf mindestens ein Rad einer zweiten Fahrzeugachse übertragbar ist, wobei jedes Moment durch einen Betrag und durch eine Richtung definiert ist. Das Antriebssteuergerät ist dazu eingerichtet, zu bestimmen, ob innerhalb eines ersten vorgebbaren Zeitraums eine Laständerung bevorsteht und in dem Fall, dass eine Laständerung bevorsteht, die zweite elektrische Antriebsmaschine dazu anzusteuern, das zweite Moment für einen vorgebbaren Zeitraum mit einer Richtung einzustellen, die einer momentanen Richtung des ersten Moments entgegengesetzt ist. Hierbei ergeben sich gleiche Vorteile und Variationsmöglichkeiten wie bei dem Verfahren.

Erfindungsgemäß ist auch ein Kraftfahrzeug mit dem Antriebssteuergerät vorgesehen. Ein Kraftfahrzeug kann hierbei ein Motorrad, ein Personenkraftwagen, ein Lastkraftwagen oder ein Bus sein.

Zu der Erfindung gehören auch Weiterbildungen des erfindungsgemäßen Antriebssteuergeräts, das Merkmale aufweist, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Antriebssteuergeräts hier nicht noch einmal beschrieben.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung einer Ausführungsform eines Kraftfahrzeugs mit einer Ansicht auf die Unterseite des Kraftfahrzeugs;
- Fig. 2: ein schematisches Verfahrensdiagramm einer Ausführungsform des Verfahrens;
- Fig. 3a: ein schematisches Diagramm von Momenten bei verschiedenen Zeitpunkten während einer Fahrt; und
- Fig. 3b: ein schematisches Diagramm von Momenten bei verschiedenen Zeitpunkten während eines Anfahrvorgangs.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

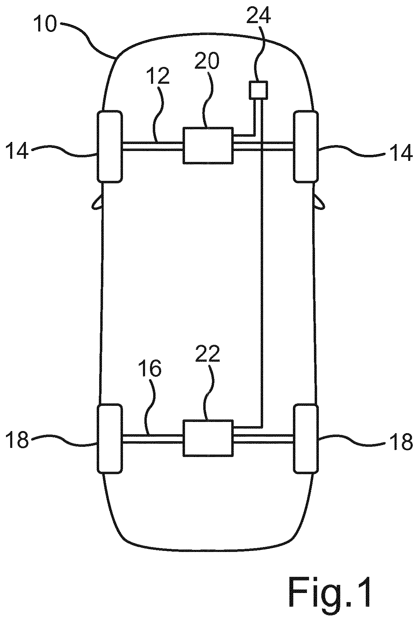

Fig. 1 zeigt eine schematische Darstellung einer Unteransicht eines Kraftfahrzeugs 10. Das Kraftfahrzeug 10, das in diesem Beispiel ein Personenkraftwagen ist, kann in anderen Ausführungsformen zum Beispiel ein Motorrad, ein Lastkraftwagen oder ein Bus sein. Das Kraftfahrzeug 10 weist eine erste Fahrzeugachse 12 auf, an der zumindest ein Rad oder wie in diesem Ausführungsbeispiel zwei Räder 14 angebracht sind. Zusätzlich weist das Kraftfahrzeug 10 eine zweite Fahrzeugachse 16 auf, an der in diesem Beispiel zwei Räder 18 angebracht sind.

In diesem Ausführungsbeispiel ist die erste Fahrzeugachse 12 die Vorderachse des Kraftfahrzeugs 10 und die zweite Fahrzeugachse 16 die hintere Achse des Kraftfahrzeugs 10, es kann jedoch auch umgekehrt vorgesehen sein.

Das Kraftfahrzeug 10 weist zumindest zwei elektrische Antriebsmaschinen auf, wobei eine erste elektrische Antriebsmaschine 20 ein erstes Moment erzeugen kann, das auf die Räder 14 der ersten Fahrzeugachse 12 übertragen werden kann. Hierzu kann vorgesehen sein, dass das erste Moment der ersten elektrischen Antriebsmaschine 20 über eine Welle an die Räder 14 übertragen wird. Es kann jedoch auch vorgesehen sein, dass die erste elektrische Antriebsmaschine 20 in den Rädern 14 verbaut ist und diese dort direkt antreibt.

Ähnlich zu der ersten Fahrzeugachse 12 mit der ersten elektrischen Antriebsmaschine 20 kann an der zweiten Fahrzeugachse 16 eine zweite elektrische Antriebsmaschine 22 vorgesehen sein, die ein zweites Moment auf die Räder 18 der zweiten Fahrzeugachse 16 übertragen kann. Das von der jeweiligen Fahrzeugachse erzeugte Moment kann beispielsweise in einer vektoriellen Form mit einem Betrag und einer Richtung dargestellt werden.

Ferner ist in dem Kraftfahrzeug 10 ein Antriebssteuergerät 24 vorgesehen, das einen Betrieb der ersten elektrischen Antriebsmaschine 20 und der zweiten elektrischen Antriebsmaschine 22 steuern kann. Insbesondere kann das Antriebssteuergerät 24 ein Verfahren zum Betrieb von den zumindest zwei elektrischen Antriebsmaschinen bei einer Laständerung des Kraftfahrzeugs 10 durchführen. Alternativ kann auch vorgesehen sein, dass mehrere Steuergeräte verwendet werden, die über einen Fahrzeugbus miteinander kommunizieren und das Verfahren durchführen. Eine Laständerung kann dabei ein Lastwechsel eines Fahrzeugs, das heißt der Übergang aus dem Schubbetrieb in den Zugbetrieb der Antriebsmaschinen sein.

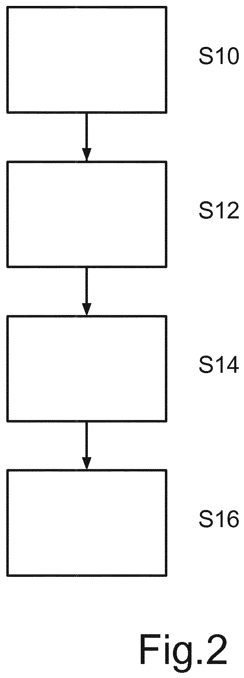

In Fig. 2 ist ein schematisches Verfahrensdiagramm einer Ausführungsform des Verfahrens dargestellt, das das Antriebssteuergerät 24 bei einer Laständerung ausführen kann. In einem Schritt S10 wird bestimmt, ob innerhalb eines ersten vorgegebenen Zeitraums eine Laständerung bevorsteht. Dabei kann es beispielsweise sein, dass das erste Moment, das durch die erste elektrische Antriebsmaschine 20 erzeugt wird, gleich null ist, und die Laständerung eine Änderung des ersten Moments auf einen Betrag ungleich null ist. Es ist jedoch auch denkbar, dass das erste Moment ungleich null ist, das heißt, dass sich das Kraftfahrzeug 10 in Bewegung befinden kann. Die Bestimmung, ob eine Laständerung bevorsteht, kann beispielsweise anhand von gemessenen Sensordaten, die an das Antriebssteuergerät 24 gesendet werden, festgestellt werden. Der erste vorgegebene Zeitraum, in dem die Laständerung bevorstehen kann, kann durch Messungen geeignet angepasst werden und zum Beispiel wenige Sekunden betragen.

In einem Schritt S12 wird, falls das Bestimmen, ob innerhalb des ersten vorgegebenen Zeitraums die Laständerung bevorsteht, bejaht wird, ein zweites Moment von beispielsweise der zweiten elektrischen Antriebsmaschine 22 für einen zweiten vorgebbaren Zeitraum mit einer Richtung eingestellt, die einer momentanen Richtung eines ersten Moments, von beispielsweise der ersten elektrischen Antriebsmaschine 20, entgegensetzt ist. Der Betrag des zweiten Moments kann dabei anhand eines vorgegebenen Betrags eingestellt werden, der vorzugsweise kleiner als der Betrag des ersten Moments ist, beispielsweise 20 Newtonmeter. Der zweite vorgebbare Zeitraum kann vorzugsweise so gewählt werden, dass das Moment der Laständerung beziehungsweise des Lastwechsels innerhalb dieses Zeitraums liegt. Zusätzlich wird in Schritt S12 das erste Moment um den vorgegebenen Betrag erhöht. Das heißt, dass bei der Feststellung, dass eine Laständerung bevorsteht, das zweite Moment mit beispielsweise 20 Newtonmetern in die entgegengesetzte Richtung zu dem ersten Moment eingestellt wird und zeitgleich das erste Moment um 20 Newtonmeter erhöht wird. Hierdurch kann ein Ausgleich des gesamten Moments, also der Summe des ersten Moments und des zweiten Moments, erreicht werden, wodurch ein konstantes Moment und dadurch keine Verzögerung entsteht.

In Schritt S14 wird von dem Antriebssteuergerät 24 bestimmt, ob der zweite vorgegebene Zeitraum abgelaufen ist, das heißt, ob der Lastwechsel vollzogen wurde.

Wenn in Schritt S14 bestimmt wird, dass der zweite vorgegebene Zeitraum abgelaufen ist, wird in einem Schritt S16 das zweite Moment wieder zurück in die Richtung des ersten Moments eingestellt und gleichzeitig wird das erste Moment um den Betrag des zweiten Moments verringert. Dies kann innerhalb eines dritten vorgegebenen Zeitraums durchgeführt werden, der sich dem zweiten vorgegebenen Zeitraum anschließt. Dieser dritte vorgegebene Zeitraum kann beispielsweise so gewählt werden, dass das Einstellen des zweiten Moments und die Verringerung des ersten Moments nicht instantan durchgeführt wird, sondern von dem Antriebssteuergerät 24 über eine geeignete Vorsteuerung wie beispielweise über Rampenfunktionen, das heißt schrittweise erhöht wird und/oder das Ansteuersignal für die erste elektrische Antriebsmaschine 20 und die zweite elektrische Antriebsmaschine 22 über Filterfunktionen beliebig angepasst werden kann.

Beispielsweise kann auch vorgesehen sein, dass das Verringern des ersten Moments um den Betrag des zweiten Moments in Schritt S16 auf einer Sensormessung basiert, die einen Leistungsparameter der ersten elektrischen Antriebsmaschine 20 und einen Leistungsparameter der zweiten elektrischen Antriebsmaschine 22 misst und die beiden Antriebsmaschinen anschließend so regelt, dass die Summe beider Leistungsparameter konstant bleibt. Beispielsweise kann hier die elektrische Leistung gemessen werden, die jede Antriebsmaschine benötigt und bei einer Erhöhung der elektrischen Leistung der zweiten elektrischen Antriebsmaschine 22 kann die elektrische Leistung der ersten elektrischen Antriebsmaschine 20 zurückgefahren werden, so dass die Summe der insgesamt verbrauchten elektrischen Leistung bei dem Wechsel des zweiten Moments in die Richtung des ersten Moments konstant bleibt.

Durch das Verfahren kann beispielsweise erreicht werden, dass das Gesamtmoment immer einem Vortriebs-Moment oder Brems- beziehungsweise Rekuperations-Moment entspricht, das von einem Fahrer eingestellt beziehungsweise gewünscht wird.

Es kann auch vorgesehen sein, dass das durch das Antriebssteuergerät 24 durchgeführte Verfahren nur ausgeführt wird, wenn sich die Geschwindigkeit des Kraftfahrzeugs 10 innerhalb eines Schwellenwertes befindet. Beispielsweise kann dieser Schwellenwert 50 Kilometer pro Stunde betragen. Geräusche, die bei einem Lastwechsel auftreten, können beispielsweise oberhalb dieses Schwellenwertes von allgemeinen Umgebungsgeräuschen beziehungsweise Fahrgeräuschen überdeckt werden, wodurch die Anwendung des Verfahrens zur Dämpfung von Geräuschen beim Lastwechsel nicht mehr notwendig ist. Es kann jedoch auch vorgesehen sein, dass das gezeigte Verfahren bei jedem Lastwechsel durchgeführt wird.

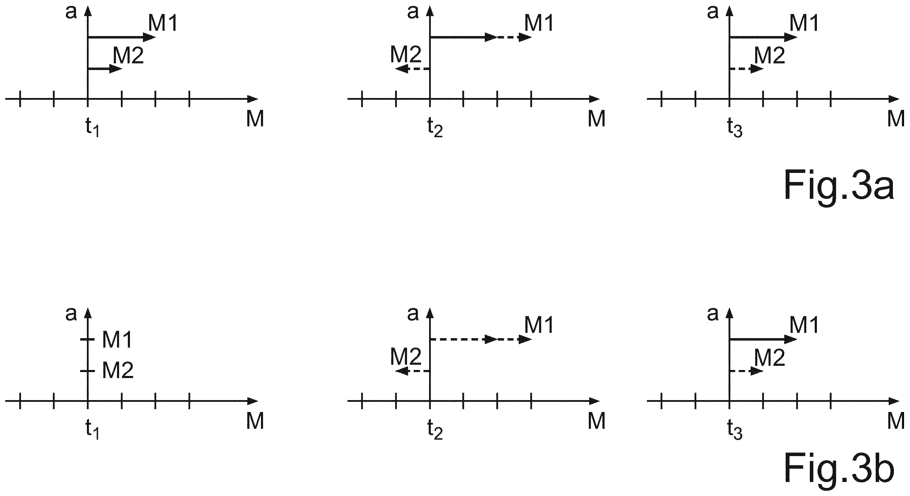

In Fig. 3a und 3b sind Momente von zwei elektrischen Antriebsmaschinen eines Kraftfahrzeugs 10 zu verschiedenen Zeitpunkten eines Ausführungsbeispiels des Verfahrens schematisch dargestellt. Auf der Abszisse M ist der Betrag des Moments in Newtonmetern aufgetragen und auf der Ordinate a ist ein erstes Moment M1 für eine erste elektrische Antriebsmaschine 20 und ein zweites Moment M2 für eine zweite elektrische Antriebsmaschine 22 dargestellt.

In dem in Fig. 3a gezeigten Ausführungsbeispiel befindet sich das Kraftfahrzeug 10 zu einem Zeitpunkt t₁ in Bewegung und das erste Moment M1 hat einen Betrag von 40 Newtonmetern und das zweite Moment M2 hat einen Betrag von 20 Newtonmetern.

Dann kann beispielsweise in einem Verfahrensschritt S10 bestimmt werden, dass eine Laständerung bevorsteht, woraufhin das zweite Moment M2 zu einem Zeitpunkt t₂ in eine entgegengesetzte Richtung zu dem ersten Moment M1 eingestellt wird, was durch eine gestrichelte Linie dargestellt ist. In diesem Beispiel wird das zweite Moment M2 mit einem Betrag von 20 Newtonmetern eingestellt. Zeitgleich kann sich das erste Moment M1 um den Betrag des zweiten Moments M2 erhöhen (gestrichelt dargestellt) und dann beispielsweise einen Betrag von 60 Newtonmetern aufweisen.

Nachdem in einem Verfahrensschritt S14 bestimmt wurde, dass die Laständerung vollzogen wurde, kann das zweite Moment M2 in einem Verfahrensschritt S16 wieder in Richtung des ersten Moments M1 eingestellt werden, beispielsweise wieder auf einen Betrag von 20 Newtonmetern, was in Fig. 3a zu dem Zeitpunkt t₃ dargestellt ist. Zeitgleich verringert sich der Betrag des ersten Moments M1 um den Betrag des zweiten Moments M2, in diesem Beispiel von 60 Newtonmetern auf 40 Newtonmetern.

In dem in Fig. 3b gezeigten Ausführungsbeispiel befindet sich das Kraftfahrzeug 10 zu einem Zeitpunkt t₁ im Stillstand und das erste Moment M1 und das zweite Moment M2 weisen einen Betrag gleich Null auf.

Zu einem Zeitpunkt t₂ kann das erste Moment M1 bei einem Anfahrvorgang einen Betrag ungleich Null annehmen, zum Beispiel auf einen Betrag von 40 Newtonmetern was als gestrichelte Linie dargestellt ist. Diese bevorstehende Laständerung wird in einem Verfahrensschritt S10 bestimmt, wodurch das zweite Moment M2 in eine entgegengesetzte Richtung des ersten Moments M1 eingestellt wird (gestrichelt dargestellt), beispielsweise mit einem Betrag von 20 Newtonmetern. Das erste Moment M1 wird zeitgleich um diesen Betrag von 20 Newtonmetern auf 60 Newtonmeter erhöht.

Nach der Laständerung, die bei dem Anfahrvorgang auftritt, wird in einem Verfahrensschritt S14 bestimmt, dass die Laständerung vollzogen wurde und das zweite Moment M2 stellt sich zu einem Zeitpunkt t₃ in einem Verfahrensschritt S16 mit einem Betrag von zum Beispiel 20 Newtonmetern wieder in Richtung des ersten Moments M1 ein. Zeitgleich verringert sich das erste Moment M1 um die 20 Newtonmeter auf einen Betrag von 40 Newtonmetern.

In einer anderen beispielhaften Ausführungsform besteht ein Aspekt darin, dass das Moment der einzelnen Antriebsmaschine, das heißt der ersten elektrischen Antriebsmaschine 20 und der zweiten elektrischen Antriebsmaschine 22, bedarfsorientiert entgegengesetzt wirken zu lassen. In auffälligen Betriebsbereichen, das heißt bei einer Laständerung, treibt eine Antriebsmaschine an und die andere stellt ein Bremsmoment, das heißt ein zu der ersten Richtung entgegengesetztes Moment, ein. Dadurch kann der Antriebsstrang verspannt werden und beide Antriebsmaschinen befinden sich in einer definierten Lage, in der die Zahnflanken anliegen können.

In kritischen Situationen, zum Beispiel beim Anhalten oder Anfahren, kann das gewünschte Moment immer zuerst mit der Antriebsmaschine aufgebaut werden, die bereits auf der richtigen Seite umgelegt ist. Die andere Antriebsmaschine wirkt zuerst als Bremse entgegen und stellt anschließend zeitversetzt über Rampen das Wunschmoment ein. Diese Momentenformung beziehungsweise Verteilung kann über geeignete Vorsteuerung wie Rampen oder Filter beliebig dargestellt werden.

In dem Antriebssteuergerät 24 können auch verschiedene Fahrprogramme, das heißt Momentenvorgaben für beide Antriebsmaschinen in Abhängigkeit von der Geschwindigkeit beziehungsweise der Drehzahl, dem Fahrerwunsch, der Fahrstufe, dem Fahrprogramm und/oder der Fahrbahnneigung vorliegen.

Insgesamt zeigt das Beispiel, wie durch die Erfindung eine Momentenformung auf zwei voneinander unabhängig elektrisch angetriebene Achsen bereitgestellt werden kann.

## Patentansprüche

1. Verfahren zum Betrieb von zumindest zwei elektrischen Antriebsmaschinen bei einer Laständerung eines Fahrzeugs, wobei durch eine erste elektrische Antriebsmaschine (20) ein erstes Moment auf mindestens ein Rad (14) einer ersten Fahrzeugachse (12) übertragbar ist, und durch eine zweite elektrische Antriebsmaschine (22) ein zweites Moment auf mindestens ein Rad (18) einer zweiten Fahrzeugachse (16) übertragbar ist, wobei jedes Moment durch einen Betrag und durch eine Richtung definiert ist,
**gekennzeichnet durch** folgende Schritte:
a) Bestimmen (S10), ob innerhalb eines ersten vorgegebenen Zeitraums eine Laständerung bevorsteht;
b) Falls Schritt a) bejaht wird: Einstellen (S12) des zweiten Moments für einen zweiten vorgebbaren Zeitraum mit einer Richtung, die einer momentanen Richtung des ersten Moments entgegengesetzt ist;
c) Bestimmen (S14), ob der zweite vorgegebene Zeitraum abgelaufen ist;
d) falls Schritt c) bejaht wird, zeitgleich innerhalb eines dritten vorgegebenen Zeitraums, der sich dem zweiten vorgegebenen Zeitraum anschließt, die Schritte (S16) durchgeführt werden:
- Einstellen des zweiten Moments in die Richtung des ersten Moments;
- Verringern des ersten Moments um den Betrag des zweiten Moments.

2. Verfahren nach Anspruch 1, wobei das erste Moment vor der Ausführung von Schritt a) einen Betrag aufweist, der ungleich Null ist, wobei als Laständerung ein Lastwechsel durchgeführt wird, bei dem das zweite Moment seine Richtung ändert.

3. Verfahren nach Anspruch 1, wobei das erste Moment vor Ausführung von Schritt a) einen Betrag aufweist, der gleich Null ist, wobei als Laständerung das erste Moment einen Betrag ungleich Null annimmt.

4. Verfahren nach einem der vorhergehenden Ansprüche, wobei in Schritt b) das zweite Moment mit einem vorgegebenen Betrag in die entgegengesetzte Richtung zu der momentanen Richtung des ersten Moments eingestellt wird.

5. Verfahren nach einem der vorhergehenden Ansprüche, wobei der Schritt b) ferner umfasst: zeitgleiches Erhöhen des ersten Moments um den Betrag des zweiten Moments in die Richtung des ersten Moments für den zweiten vorgegebenen Zeitraum.

6. Verfahren nach einem der vorhergehenden Ansprüche, wobei das Verringern des ersten Moments basierend auf einer Sensormessung durchgeführt wird, bei der ein Leistungsparameter der ersten elektrischen Antriebsmaschine (20) und ein Leistungsparameter der zweiten elektrischen Antriebsmaschine (22) bestimmt wird und anschließend das erste Moment so geregelt wird, dass die Summe beider Leistungsparameter konstant bleibt.

7. Verfahren nach einem der vorhergehenden Ansprüche, wobei mindestens zwei Räder (14) an der ersten Fahrzeugachse (12) und mindestens zwei Räder (18) an der zweiten Fahrzeugachse (16) angebracht sind und jedes Rad eine eigene elektrische Antriebsmaschine aufweist, wobei die Summe der Momente der Räder an der ersten Fahrzeugachse (12) das erste Moment ergibt und die Summe der Momente der Räder an der zweiten Fahrzeugachse (16) das zweite Moment ergibt.

8. Antriebssteuergerät (24) zum Betrieb von zumindest zwei elektrischen Antriebsmaschinen bei einer Laständerung, wobei durch eine erste elektrische Antriebsmaschine (20) ein erstes Moment auf mindestens ein Rad (14) einer ersten Fahrzeugachse (12) übertragbar ist, und durch eine zweite elektrische Antriebsmaschine (22) ein zweites Moment auf mindestens ein Rad (18) einer zweiten Fahrzeugachse (16) übertragbar ist, wobei jedes Moment durch einen Betrag und durch eine Richtung definiert ist, wobei das Antriebssteuergerät (24) dazu eingerichtet ist, ein Verfahren nach einem der vorhergehenden Ansprüche durchzuführen.

9. Kraftfahrzeug (10) mit dem Antriebssteuergerät (24) nach Anspruch 8.

## Claims

1. Method for operating at least two electric drive machines in the event of a load change of a vehicle, wherein a first torque can be transmitted to least one wheel (14) of a first vehicle axle (12) by means of a first electric drive machine (20) and a second torque can be transmitted to at least one wheel (18) of a second vehicle axle (16) by means of a second electric drive machine (22), wherein each torque is defined by a value and by a direction,
**characterized by** the following steps:
a) determining (S10) whether a load change is imminent within a first predetermined time period;
b) if step a) is answered "yes": adjusting (S12) the second torque for a second predeterminable time period with a direction which is counter to a current direction of the first torque;
c) determining (S14) whether the second predetermined time period has elapsed;
d) if step c) is answered "yes", the steps (S16) are performed simultaneously within a third predetermined time period which follows the second predetermined time period:
- adjusting the second torque in the direction of the first torque;
- decreasing the first torque by the value of the second torque.

2. Method according to claim 1, wherein the first torque before step a) is carried out has a value which is not equal to zero, wherein as a load change a load alternation is performed, wherein the second torque changes its direction.

3. Method according to claim 1, wherein the first torque before step a) is carried out has a value which is equal to zero, wherein as a load change the first torque assumes a value which is not equal to zero.

4. Method according to any one of the preceding claims, wherein in step b) the second torque is adjusted with a predetermined value in the opposite direction to the current direction of the first torque.

5. Method according to any one of the preceding claims, wherein the step b) further comprises: simultaneously increasing the first torque by the value of the second torque in the direction of the first torque for the second predetermined time period.

6. Method according to any one of the preceding claims, wherein the decrease of the first torque is performed on the basis of a sensor measurement, in which a performance parameter of the first electric drive machine (20) and a performance parameter of the second electric drive machine (22) is determined and subsequently the first torque is controlled in such a manner that the sum of both performance parameters remains constant.

7. Method according to any one of the preceding claims, wherein at least two wheels (14) are fitted on the first vehicle axle (12) and at least two wheels (18) are fitted on the second vehicle axle (16) and each wheel has its own electric drive machine, wherein the sum of the torques of the wheels on the first vehicle axle (12) produces the first torque and the sum of the torques of the wheels on the second vehicle axle (16) produces the second torque.

8. Drive control device (24) for operating at least two electric drive machines in the event of a load change, wherein a first torque can be transmitted to least one wheel (14) of a first vehicle axle (12) by means of a first electric drive machine (20) and a second torque can be transmitted to at least one wheel (18) of a second vehicle axle (16) by means of a second electric drive machine (22), wherein each torque is defined by a value and by a direction, wherein the drive control device (24) is configured to perform a method according to any one of the preceding claims.

9. Motor vehicle (10) having the drive control apparatus (24) according to claim 8.

## Revendications

1. Procédé de fonctionnement d'au moins deux machines d'entraînement électriques dans le cas d'une modification de charge d'un véhicule, dans lequel un premier couple peut être transmis à au moins une roue (14) d'un premier essieu de véhicule (12) par une première machine d'entraînement (20) électrique, et un second couple peut être transmis à au moins une roue (18) d'un second essieu de véhicule (16) par une seconde machine d'entraînement (22) électrique, dans lequel chaque couple est défini par une valeur et par une direction,
**caractérisé par** les étapes suivantes :
a) déterminer (S10) si une modification de charge est imminente dans une première période prédéfinie ;
b) si l'étape a) appelle la réponse « oui » : régler (512) le second couple pour une deuxième période prédéfinissable avec une direction qui est opposée à une direction momentanée du premier couple ;
c) déterminer (514) si la deuxième période prédéfinie est expirée ;
d) si l'étape c) appelle la réponse « oui », les étapes (S16) sont réalisées simultanément dans une troisième période prédéfinie qui suit la deuxième période prédéfinie :
- régler le second couple dans la direction du premier couple ;
- diminuer le premier couple selon la valeur du second couple.

2. Procédé selon la revendication 1, dans lequel le premier couple présente avant la réalisation de l'étape a) une valeur qui est non nulle, dans lequel un changement de charge est réalisé comme modification de charge, changement pour lequel le second couple modifie sa direction.

3. Procédé selon la revendication 1, dans lequel le premier couple présente avant la réalisation de l'étape a) une valeur qui est nulle, dans lequel le premier couple adopte une valeur non nulle comme modification de charge.

4. Procédé selon l'une quelconque des revendications précédentes, dans lequel à l'étape b), le second couple est réglé avec une valeur prédéfinie dans la direction opposée à la direction momentanée du premier couple.

5. Procédé selon l'une quelconque des revendications précédentes, dans lequel l'étape b) comprend de plus : l'augmentation simultanée du premier couple selon la valeur du second couple dans la direction du premier couple pour la deuxième période prédéfinie.

6. Procédé selon l'une quelconque des revendications précédentes, dans lequel la diminution du premier couple est réalisée sur la base d'une mesure de capteur, pour laquelle un paramètre de puissance de la première machine d'entraînement (20) électrique et un paramètre de puissance de la seconde machine d'entraînement (22) électrique sont déterminés et ensuite le premier couple est commandé de sorte que la somme des deux paramètres de puissance reste constante.

7. Procédé selon l'une quelconque des revendications précédentes, dans lequel au moins deux roues (14) sont montées au niveau du premier essieu de véhicule (12) et au moins deux roues (18) sont montées au niveau du second essieu de véhicule (16), et chaque roue présente une propre machine d'entraînement électrique, dans lequel la somme des couples des roues au niveau du premier essieu de roue (12) produit le premier couple et la somme des couples des roues au niveau du second essieu de véhicule (16) produit le second couple.

8. Appareil de commande d'entraînement (24) pour le fonctionnement d'au moins deux machines d'entraînement électriques dans le cas d'une modification de charge, dans lequel un premier couple peut être transmis à au moins une roue (14) d'un premier essieu de véhicule (12) par une première machine d'entraînement (20) électrique, et un second couple peut être transmis à au moins une roue (18) d'un second essieu de véhicule (16) par une seconde machine d'entraînement (22) électrique, dans lequel chaque couple est défini par une valeur et par une direction, dans lequel l'appareil de commande d'entraînement (24) est conçu afin de réaliser un procédé selon l'une quelconque des revendications précédentes.

9. Véhicule automobile (10) avec l'appareil de commande d'entraînement (24) selon la revendication 8.
